# EUROPÄISCHE PATENTSCHRIFT

(11) **EP 3 031 106 B1**
(45) Veröffentlichungstag und Bekanntmachung des Hinweises auf die Patenterteilung: **24.02.2021**
(21) Anmeldenummer: 14757860.3
(22) Anmeldetag: 07.08.2014
(51) Int. Cl.: H01R 13/629

(54) **SCHNELLLADESYSTEM SOWIE VERFAHREN ZUR ELEKTRISCHEN VERBINDUNG EINES FAHRZEUGS MIT EINER LADESTATION**
RAPID CHARGING SYSTEM AND METHOD FOR ELECTRICAL CONNECTION OF A VEHICLE TO A CHARGING STATION
SYSTEME DE RECHARGE RAPIDE AINSI QUE PROCÉDÉ DE LIAISON ÉLECTRIQUE D'UN VÉHICULE AVEC UNE STATION DE CHARGE

(30) Priorität: 09.08.2013 DE 102013013201
(43) Veröffentlichungstag der Anmeldung: 15.06.2016
(73) Patentinhaber: Schunk Transit Systems GmbH, 35435 Wettenberg (DE)
(72) Erfinder: WEIGEL, Wilfried, 35232 Dautphetal (DE); SCHNEIDER, Lothar, 35633 Lahnau (DE); DOMES, Matthias, 61231 Bad Nauheim (DE); THIELMANN, Viktor, 35415 Pohlheim (DE); STAUBACH, Timo, 36358 Herbstein (DE); KLAUSNER, Sven, 01099 Dresden (DE)
(74) Vertreter: advotec.
(86) Internationale Anmeldenummer: PCT/EP2014/066983
(87) Internationale Veröffentlichungsnummer: WO 2015/018888

(56) Entgegenhaltungen:
- WO-A2-2010/076976
- DE-A1-102007 029 197
- JP-A- 2006 081 310
- US-A- 3 786 762
- US-A1- 2010 235 006

## Beschreibung

Die Erfindung betrifft ein Schnellladesystem sowie ein Verfahren zur Ausbildung einer elektrisch leitenden Verbindung zwischen einem Fahrzeug und einer stationären Ladestation, insbesondere für ein Schnellladesystem für elektrisch angetriebene Fahrzeuge, wie Elektrobusse oder dergleichen, mit der Kontaktvorrichtung und der Ladekontakteinheit, wobei die Kontaktvorrichtung an einem Fahrzeug anordbar ist, wobei die Kontaktvorrichtung eine Kontakteinrichtung umfasst, wobei mit der Kontakteinrichtung die Ladekontakteinheit kontaktierbar ist, wobei die Kontaktvorrichtung oder die Ladekontakteinheit eine Positioniereinrichtung umfasst, wobei mittels der Positioniereinrichtung die Kontakteinrichtung relativ zur Ladekontakteinheit positionierbar ist, wobei die Positioniereinrichtung einen Pantografen oder eine Schwinge aufweist, wobei die Kontakteinrichtung einen Kontaktelementträger mit Kontaktelementen aufweist, wobei die Kontaktelemente mit Ladekontaktelementen der Ladekontakteinheit jeweils zur Ausbildung von Kontaktpaarungen kontaktierbar sind, wobei die Positioniereinrichtung eine Querführung aufweist, mittels der der Kontaktelementträger quer relativ zur Ladekontakteinheit positionierbar ist, wobei die Querführung an einem distalen, kontaktseitigen Ende des Pantografen oder der Schwinge angeordnet ist.

Derartige Kontaktvorrichtungen, Ladekontakteinheiten bzw. Verfahren sind bereits aus dem Stand der Technik bekannt und werden regelmäßig zur Schnellladung elektrisch angetriebener Fahrzeuge an einer Haltestelle bzw. einem Haltepunkt eingesetzt. Im Nahverkehr eingesetzte elektrisch angetriebene Fahrzeuge, wie beispielsweise Busse, können unter anderem über eine Oberleitung kontinuierlich mit elektrischer Energie versorgt werden. Dies setzt jedoch das Vorhandensein bzw. den Unterhalt eines Oberleitungssystems voraus. Um die Vorteile eines elektrischen Antriebs auch ohne ein Oberleitungsnetz nutzen zu können, ist es bekannt, öffentliche Verkehrsmittel mit Batterien oder auch anderen Arten von Energiespeichern auszustatten. Von Nachteil sind hier die begrenzte Reichweite des Verkehrsmittels und eine nach einer vergleichsweise kurzen Fahrzeit erforderliche Aufladung der Batterien. Ein Dauerbetrieb des Verkehrsmittels kann jedoch gewährleistet werden, wenn während eines Halts des Verkehrsmittels an einer Haltestelle eine Schnellladung der Batterien erfolgen kann.

Hier sind aus dem Stand der Technik verschiedene Systeme zur Herstellung einer elektrisch leitenden Verbindung zwischen einer Ladestation, welche im Bereich einer Haltestelle stationär angeordnet ist, und einem Fahrzeug bzw. Elektrobus bekannt. So kann an einem Elektrobus ein sogenannter Stromabnehmer mit einer Schleifleiste auf einem Dach des Elektrobusses angeordnet sein, wobei im Bereich der Haltestelle eine in Fahrtrichtung des Elektrobusses längs verlaufende Schiene über einer Fahrbahn aufgehängt ist. Bei einem Halt des Elektrobusses an der Haltestelle wird der Stromabnehmer von dem Dach des Busses nach oben an die Schiene bewegt, wodurch eine elektrische Verbindung für die Dauer des vorgesehenen Halts des Elektrobusses an der Haltestelle hergestellt wird, sodass in diesem Zeitraum eine Schnellladung erfolgen kann.

Insbesondere sind jedoch zwei voneinander unabhängige Stromabnehmer und entsprechende Kontaktierbereiche an der Schiene erforderlich, um einen Ladestromkreis ausbilden zu können.

Weiter ist es bekannt, an einem Stromabnehmer mehrere als Schleifleiste ausgebildete Kontaktelemente anzuordnen und diese mit einer entsprechenden Anzahl in Fahrtrichtung des Elektrobusses angeordneter, paralleler Schienen zu kontaktieren. So ist es möglich, eine größere Anzahl von Kontaktpaarungen mit einem einzelnen Stromabnehmer bzw. einer Kontaktvorrichtung gleichzeitig herzustellen. So zusätzlich ausgebildete elektrische Verbindungsleitungen zwischen der Ladestation und dem Fahrzeug können beispielsweise zur Steuerung und Überwachung eines Ladevorgangs genutzt werden.

Bei einem weiteren bekannten Schnellladesystem ist eine Kontaktvorrichtung auf einem Dach eines Elektrobusses so angeordnet, dass quer zur Fahrtrichtung des Elektrobusses ein Arm ausgefahren werden kann, welcher mit einer Ladekontakteinheit, die in einem Haltestellenunterstand oder einem Gebäude integriert ist, verbunden werden kann. Hier ist es insbesondere von Nachteil, dass der Elektrobus von einem Fahrer besonders genau an einer derartigen Haltestelle an einer vorbestimmten Position positioniert werden muss, damit überhaupt eine Verbindung zwischen Elektrobus und Ladestation hergestellt werden kann.

Alternativ kann ein Schnellladesystem auch so ausgestaltet sein, dass eine Ladekontakteinheit an der Ladestation in Richtung eines Daches eines Elektrobusses abgesenkt wird. Die Ladekontakteinheit wird dann zunächst mit dem Dach des Elektrobusses in Kontakt gebracht, wobei der Elektrobus danach relativ zur Ladekontakteinheit in Fahrtrichtung so positioniert wird, dass die Ladekontakteinheit an eine auf dem Dach angeordnete Schiene geführt wird. Die Schiene ist dann mit entsprechenden Kontakten zur Herstellung einer elektrischen Verbindung versehen. Hier ist es insbesondere nachteilig, dass sämtliche Haltestellen einer Buslinie mit einer vergleichsweise technisch aufwändigen, positionierbaren Ladekontakteinheit ausgestattet werden müssen. Demgegenüber ist der Einsatz einer stationären Ladekontakteinheit, die über keinen besonderen mechanischen Bewegungsmechanismus verfügt, wesentlich kostengünstiger.

Jedoch auch bei stationären Ladekontakteinheiten bzw. Schienen, die oberhalb oder seitlich eines an einer Haltestelle haltenden Elektrobusses angeordnet sind, können eine Reihe Probleme auftreten. Insbesondere in Abhängigkeit einer Zuladung des Elektrobusses kann der Elektrobus relativ zur Ladekontakteinheit bei einem Halt tiefer oder höher positioniert sein. Auch bei einem Absenken des Elektrobusses auf der Einstiegsseite, um so den Fahrgästen das Einsteigen zu erleichtern, kommt es zu einem Verschieben der Kontaktvorrichtung bzw. der verwendeten Schleifleisten relativ zu einer Ladekontakteinheit bzw. Schiene, sodass ein elektrischer Kontakt unterbrochen werden kann. Werden parallele Schienen verwendet, ist es im Übrigen auch hier erforderlich, den Elektrobus in einem dafür vorgesehenen Bereich an der Haltestelle relativ genau zu positionieren. Eine von einer vorgesehenen Position des Elektrobusses abweichende Position sowie einseitiges, seitliches Absenken des Elektrobusses können eine erfolgreiche Kontaktierung bzw. Verbindung von Fahrzeug und Ladestation verhindern und bergen ein erhebliches Gefahrenpotenzial. So kann es zur unbeabsichtigten Kontaktierung bzw. Verbindung von Leitern oder auch zu Kurzschlüssen kommen, welche Bauelemente des Schnellladesystems oder auch in der Nähe befindliche Personen schädigen können.

Aus der DE 10 2007 029 197 A1 ist ein Stromabnehmer für einen Schienenfahrzeug bekannt, wobei an einem oberen Ende einer Schwinge des Stromabnehmers eine elektromotorisch angetriebene Querführung angeordnet ist. Mittels der Querführung wird eine Schleifleiste quer zu einem Fahrdraht so verschoben, dass eine regelmäßige Abnutzung der Schleifleiste gewährleistet ist.

Aus der US 2010/235006 A1 ist unter anderem eine Kontaktvorrichtung bzw. eine Ladekontakteinheit zum Schnellladen eines Elektrofahrzeuges bekannt, wobei hier eine induktive Verbindung mit dem Elektrofahrzeug an dessen Unterseite erfolgt. Dazu ist ein Pantograph der Kontaktvorrichtung auf Schienen längs- und querverschieblich auf einem befahrbaren Untergrund angeordnet. So wird es möglich, die Kontaktvorrichtung relativ zur Ladekontakteinheit für einen Ladevorgang auszurichten und zu positionieren.

Die WO 2010/076976 A2 zeigt ebenfalls ein elektrisch angetriebenes Fahrzeug, welches an einer Unterseite kontaktierbar ist.

Die US 3,786,762 zeigt ein Stromversorgungssystem für auf einer vorgegeben Fahrstrecke verkehrende Fahrzeuge mit den Merkmalen des Oberbegriffs der Hauptansprüche.

Der vorliegenden Erfindung liegt daher die Aufgabe zugrunde ein Schnellladesystem sowie ein Verfahren zur Ausbildung einer elektrisch leitenden Verbindung zwischen einem Fahrzeug und einer Ladestation vorzuschlagen, welches eine sichere Kontaktierung bei einem gleichzeitig kostengünstigen Betrieb des Verkehrsmittels ermöglicht.

Diese Aufgabe wird durch ein Schnellladesystem mit den Merkmalen des Anspruchs 1 sowie ein Verfahren mit den Merkmalen des Anspruchs 11 gelöst.

Die erfindungsgemäße Schnellladesystem für elektrisch angetriebene Fahrzeuge, insbesondere Elektrobusse oder dergleichen, mit einer Kontaktvorrichtung und einer Ladekontakteinheit, dient der Ausbildung einer elektrisch leitenden Verbindung zwischen einem Fahrzeug und einer stationären Ladestation mit einer Ladekontakteinheit, wobei die Kontaktvorrichtung an einem Fahrzeug anordbar ist, wobei die Kontaktvorrichtung eine Kontakteinrichtung umfasst, wobei mit der Kontakteinrichtung die Ladekontakteinheit kontaktierbar ist, wobei die Kontaktvorrichtung oder die Ladekontakteinheit eine Positioniereinrichtung umfasst, wobei mittels der Positioniereinrichtung die Kontakteinrichtung relativ zur Ladekontakteinheit positionierbar ist, wobei die Positioniereinrichtung einen Pantografen oder eine Schwinge aufweist, wobei die Kontakteinrichtung einen Kontaktelementträger mit Kontaktelementen aufweist, wobei die Kontaktelemente mit Ladekontaktelementen der Ladekontakteinheit jeweils zur Ausbildung von Kontaktpaarungen kontaktierbar sind, wobei die Positioniereinrichtung eine Querführung aufweist, mittels der der Kontaktelementträger quer relativ zur Ladekontakteinheit positionierbar ist, wobei die Querführung an einem distalen, kontaktseitigen Ende des Pantografen oder der Schwinge angeordnet ist, wobei die Kontakteinrichtung auf einem Fahrzeugdach unterhalb der Ladekontakteinheit anordbar ist, wobei mittels dem Pantografen oder der Schwinge die Kontakteinrichtung in vertikaler Richtung relativ zur Ladekontakteinheit positionierbar ist, wobei der Kontaktelementträger oder die Ladekontakteinheit quer zur Fahrtrichtung des Fahrzeugs frei verschieblich an der Querführung angeordnet ist.

So kann bei einem Halt, beispielsweise eines Elektrobusses, an einer Haltestelle mittels der Positioniereinrichtung die Kontakteinrichtung bewegt und in vorzugsweise einer vertikalen Richtung der Ladekontakteinheit angenähert und mit dieser zusammengeführt werden. Prinzipiell ist es auch möglich, dass die Ladekontakteinheit die Positioniereinrichtung aufweist und mittels der Positioniereinrichtung der Kontakteinrichtung angenähert wird. Ein derart ausgebildeter Ladekontakt zwischen Ladestation und Fahrzeug umfasst zumindest zwei Kontaktpaarungen von jeweils einem Kontaktelement und einem zugehörigen Ladekontaktelement der Ladekontakteinheit.

Die Positioniereinrichtung weist erfindungsgemäß einen Pantografen oder eine Schwinge auf, mittels dem bzw. der die Kontakteinrichtung in vertikaler Richtung relativ zur Ladekontakteinheit bzw. zu dem Fahrzeug positioniert werden kann. Bei einer Schwinge kann ein ergänzendes Koppelgetriebe vorgesehen sein, welches die Kontakteinrichtung relativ zur Ladekontakteinheit stabilisiert bzw. in der betreffenden Richtung ausrichtet. Ein Pantograf oder eine Schwinge bzw. ein entsprechender mechanischer Antrieb ist besonders einfach und kostengünstig herstellbar.

Die Positioniereinrichtung weist eine Querführung auf, mittels der der Kontaktelementträger quer relativ zur Ladekontakteinheit bzw. zur Fahrtrichtung des Fahrzeugs positioniert werden kann. Die Querführung ist an dem Pantografen oder der Schwinge der Positioniereinrichtung angeordnet. In beiden Fällen ist dann der an der Querführung angeordnete Kontaktelementträger oder die Ladekontakteinheit quer zur Fahrtrichtung des Fahrzeugs verschiebbar. Durch diese Verschiebbarkeit kann beispielsweise eine fehlerhafte Positionierung des Fahrzeugs an einer Haltestelle quer zur Fahrtrichtung ausgeglichen werden. Darüber hinaus werden eventuelle Fahrzeugbewegungen in Folge eines einseitigen Absenkens des Fahrzeugs zum Ein- und Aussteigen von Personen so ausgeglichen, dass es zu keiner Verschiebung des Kontaktelementträgers relativ zur Ladekontakteinheit in Querrichtung kommen kann.

Erfindungsgemäß ist die Querführung an einem distalen Ende des Pantografen oder der Schwinge angeordnet. Dadurch ist es nicht mehr erforderlich, dass die Schwinge bzw. der Pantograf quer zur Fahrtrichtung bewegt wird, sondern es ist ausreichend, allein den Kontaktelementträger oder die Ladekontakteinheit an der Querführung zu bewegen. Dadurch verringert sich eine zu bewegende Masse. Auch wird dann ein geringeres Drehmoment bzw. keine wesentlichen Querkräfte mehr auf einen Pantografen oder eine Schwinge ausgeübt. Vorzugsweise ist die Querführung an dem distalen, oberen Ende des Pantografen oder der Schwinge unmittelbar fest montiert sein, sodass der Kontaktelementträger dann leicht an der Querführung bewegt werden kann.

Die Querführung kann als eine geradförmige Linearführung oder auch als eine bogenförmige Linearführung ausgebildet sein. Die bogenförmige Linearführung kann dann einen Radius eines Bogens aufweisen, der einer Höhe der Querführung über einem Fahrweg entspricht.

Erfindungsgemäß ist die Kontakteinrichtung auf einem Fahrzeugdach angeordnet. Beispielsweise kann es sich dabei um ein Fahrzeugdach eines Elektrobusses oder auch eines Straßenbahnwagens handeln. Dabei kann beispielsweise auch vorgesehen sein, die Kontakteinrichtung so auf dem Fahrzeugdach zu positionieren, dass diese in Fahrtrichtung auf einer Fahrerseite des Fahrzeugdaches angeordnet ist. Einem Fahrer des Fahrzeuges wird so eine Positionierung der Kontaktvorrichtung unterhalb einer Ladekontakteinheit wesentlich vereinfacht, da diese bzw. deren Lage in Blickrichtung des Fahrers liegt.

Weiter können die Kontaktelemente so an dem Kontaktelementträger relativ zu den Ladekontaktelementen angeordnet sein, dass bei einem Zusammenführen von Kontakteinrichtungen und Ladekontakteinheit eine definierte Reihenfolge bei der Ausbildung von Kontaktpaarungen eingehalten wird. Demnach kann eine erste Kontaktpaarung vor einer weiteren Kontaktpaarung ausgebildet werden. Insbesondere kann dabei vorgesehen sein, dass die Kontaktelemente so an dem Kontaktelementträger angeordnet sind, dass eine Reihenfolge der Herstellung der Kontaktpaarungen sich zwangsläufig ergibt. Bei den aus dem Stand der Technik bekannten Vorrichtungen kann auch eine zeitlich versetzte Ausbildung von Kontaktpaarungen erfolgen, wobei jedoch hier diese dann unbeabsichtigt ist bzw. nicht auf die Anordnung der Kontaktelemente an dem Kontaktelementträger zurückzuführen ist. Die Anordnung der Kontaktelemente an dem Kontaktelementträger stellt somit sicher, dass die Reihenfolge der Ausbildung der Kontaktpaarungen bei dem Zusammenführen von Kontakteinrichtung und Ladekontakteinheit zwangsläufig immer eingehalten wird und aufgrund der geometrischen Anordnung der Kontaktelemente auch nicht ohne Weiteres veränderbar ist. Die Anordnung der Kontaktelemente kann somit die Reihenfolge der Ausbildung der Kontaktpaarungen festschreiben. So kann insbesondere auch sichergestellt werden, dass keine unbeabsichtigte oder fehlerhafte Kontaktierung bzw. Ausbildung von Kontaktpaarungen nicht einander zugehöriger Kontaktelemente und Ladekontaktelemente erfolgt. Beispielsweise ist es dann denkbar, zunächst eine zuerst ausgebildete Kontaktpaarung ggf. mit messtechnischen Mitteln zu prüfen, bevor eine weitere Kontaktpaarung ausgebildet wird oder die Kontaktpaarungen mit elektrischer Energie beaufschlagt werden. Alternativ kann die erste Kontaktpaarung auch zur Verbindung mit einem Neutralleiter oder einem ähnlichen, eine elektrische Verbindungssicherheit gewährleistenden Leiter dienen. Die so ausgebildete, definierte Kontaktreihenfolge ermöglicht es, einen Kontaktierungsprozess der Kontaktvorrichtung mit einer Ladekontakteinheit wesentlich sicherer zu gestalten.

Der Kontaktelementträger kann zwei, vorzugsweise drei oder mehr Positionierflächen ausbilden, die übereinstimmend mit Anlageflächen der Ladekontakteinheit zur Anlage des Kontaktelementträgers ausgebildet sind. Die Positionierflächen des Kontaktelementträgers können sich dann an die Anlageflächen der Ladekontakteinheit anschmiegen, sodass bei einer Zusammenführung von Kontakteinrichtung und Ladekontakteinheit der Kontaktelementträger in seine in der Ladekontakteinheit vorgesehene Position lagerichtig positioniert werden kann. Die Positionierflächen können insbesondere eine Geometrie bzw. Relativanordnung zueinander aufweisen, die mit den Anlageflächen so übereinstimmt, dass ein sicheres Zusammenführen von Kontakteinrichtung und Ladekontakteinheit in eine definierte Kontaktposition gewährleistet ist.

Erfindungsgemäß ist der Kontaktelementträger frei verschieblich an der Querführung angeordnet. Durch die frei verschiebliche Anordnung des Kontaktelementträgers wird ein Ausgleich bei einem Verkippen des Fahrzeugs quer zur Fahrtrichtung durch ein einseitiges Absenken erheblich vereinfacht. Bei dem Verkippen wird dann die Positioniereinrichtung seitlich, d. h. quer zur Fahrtrichtung geneigt, wobei der Kontaktelementträger mit der Ladekontakteinheit verbunden bleibt und an der Querführung verschoben wird. Die Querführung kann dabei so ausgestaltet sein, dass diese als eine Führungsschiene oder mit Führungsprofilen für den Kontaktelementträger ausgebildet ist. Weiter kann vorgesehen sein, den Kontaktelementträger auf der Querführung zu zentrieren, d. h. beispielsweise mittels einer Federeinrichtung in Ruhelage mittig relativ zur Querführung auszurichten.

Die Kontaktelemente können bolzenförmig ausgebildet sein, wobei die Kontaktelemente am Kontaktelementträger federnd gelagert sein können. Die Kontaktelemente sind so besonders einfach herstellbar, wobei die federnde Lagerung durch eine einfache Druckfeder innerhalb eines Kontaktelements ausgeführt werden kann. Infolgedessen kann so ein punktueller Kontakt mit einem Ladekontaktelement unter einer Federvorspannung ausgebildet werden. Weiter kann es auch vorgesehen sein, dass, beispielsweise für eine Leistungskontaktpaarung, eine Mehrzahl von Kontaktelementen vorgesehen ist. Dies ist insbesondere dann sinnvoll, wenn die Ladekontaktelemente vergleichsweise großflächig ausgebildet sind, sodass über die bolzenförmigen Kontaktelemente dann ein größerer Strom sicher übertragen werden kann. Vorzugsweise können zwei Kontaktelemente für jeweils eine Phase bzw. einen Leistungskontakt vorgesehen sein. Dabei kann es abweichend von der zuvor beschriebenen Ausführungsform auch vorgesehen sein, die Kontaktelemente am Kontaktelementträger nicht bolzenförmig auszuführen, sondern die Ladekontakteinheit mit bolzenförmigen Ladekontaktelementen auszustatten und umgekehrt.

Eine zeitlich beabstandete Ausbildung von Kontaktpaarungen kann besonders einfach mittels zumindest zweier Kontaktelemente realisiert werden, die relativ zu einer Oberfläche bzw. zu Positionierflächen des Kontaktelementträgers in unterschiedlichen Höhen von der Oberfläche hervorstehen. Aus den unterschiedlichen Höhen der jeweiligen Kontaktelemente relativ zu der Oberfläche bzw. den Positionierflächen ergibt sich zwangsläufig eine Kontaktreihenfolge, bei der zunächst das am höchsten hervorstehende Kontaktelement mit einem Ladekontaktelement kontaktiert wird. Unabhängig davon ist es möglich, die Kontaktelemente jeweils auf von einander verschiedenen Positionierflächen des Kontaktelementträgers anzuordnen, wobei die Positionierflächen relativ zueinander dann so ausgebildet sein können, dass sich allein durch die Relativanordnung der Positionierflächen mit den Kontaktelementen eine von einander abweichende Kontaktreihenfolge ergibt, ohne dass zwangsläufig die Kontaktelemente unterschiedliche Höhen relativ zu den Positionierflächen aufweisen müssten.

Auch kann zumindest ein Kontaktelement mit einem Ladekontaktelement verriegelbar sein. Die Verriegelung kann durch eine formschlüssige und/oder eine kraftschlüssige Verbindung der jeweiligen Elemente erfolgen, wobei durch die Verriegelung des Kontaktelements relativ zum Ladekontaktelement und umgekehrt nicht mehr bewegt werden kann. Eine unbeabsichtigte Bewegung des Fahrzeugs kann dann auch nicht zu einer Trennung der Kontaktpaarungen bzw. Verbindung zwischen Kontaktelement und dem Ladekontaktelement führen. Die Verriegelung der Elemente kann insbesondere vorteilhaft zur Herstellung einer sicheren Datenverbindung zwischen dem Fahrzeug und der stationären Ladestation benutzt werden. Beispielsweise kann dann auch vorgesehen sein, die Kontaktvorrichtung mit fünf Kontaktpaarungen bzw. -polen auszubilden.

Die Ladekontakteinheit für ein Schnellladesystem für elektrisch angetriebene Fahrzeuge, insbesondere Elektrobusse oder dergleichen, dient zur Ausbildung einer elektrisch leitenden Verbindung zwischen einem Fahrzeug mit einer Kontaktvorrichtung und einer stationären Ladestation mit der Ladekontakteinheit, wobei die Kontaktvorrichtung an einem Fahrzeug angeordnet ist, wobei die Kontaktvorrichtung eine Kontakteinrichtung umfasst, wobei mit der Kontakteinrichtung die Ladekontakteinheit kontaktierbar ist, wobei die Kontaktvorrichtung oder die Ladekontakteinheit eine Positioniereinrichtung umfasst, wobei mittels der Positioniereinrichtung die Kontakteinrichtung relativ zur Ladekontakteinheit positionierbar ist, wobei die Positioniereinrichtung einen Pantografen oder eine Schwinge aufweist, mittels dem bzw. der die Kontakteinrichtung in vertikaler Richtung relativ zur Ladekontakteinheit positionierbar ist, wobei die Kontakteinrichtung einen Kontaktelementträger mit Kontaktelementen aufweist, wobei die Kontaktelemente mit Ladekontaktelementen der Ladekontakteinheit jeweils zur Ausbildung von Kontaktpaarungen kontaktierbar sind, wobei die Ladekontakteinheit eine Querführung aufweist, mittels der die Ladekontakteinheit quer relativ zum Kontaktelementträger positionierbar ist.

Die Ladekontakteinheit ist so ausgebildet, dass sie mit der Kontaktvorrichtung zur Ausbildung einer elektrisch leitenden Verbindung verbindbar ist. Hinsichtlich der vorteilhaften Wirkungen der erfindungsgemäßen Ladekontakteinheit wird auf die Vorteilsbeschreibung der erfindungsgemäßen Kontaktvorrichtung verwiesen.

Erfindungsgemäß ist die Ladekontakteinheit frei verschieblich an der Querführung angeordnet. Durch die frei verschiebliche Anordnung der Ladekontakteinheit wird ein Ausgleich bei einem Verkippen des Fahrzeugs quer zur Fahrtrichtung durch ein einseitiges Absenken erheblich vereinfacht. Bei dem Verkippen wird dann die Positioniereinrichtung seitlich, d. h. quer zur Fahrtrichtung geneigt, wobei der Kontaktelementträger mit der Ladekontakteinheit verbunden bleibt und die Ladekontakteinheit an der Querführung verschoben wird. Die Querführung kann dabei so ausgestaltet sein, dass diese als eine Führungsschiene oder mit Führungsprofilen für die Ladekontakteinheit ausgebildet ist. Weiter kann vorgesehen sein, die Ladekontakteinheit auf der Querführung zu zentrieren, d. h. beispielsweise mittels einer Federeinrichtung in Ruhelage mittig relativ zur Querführung auszurichten. Prinzipiell ist es auch möglich, dass die Ladekontakteinheit die Positioniereinrichtung aufweist und mittels der Positioniereinrichtung der Kontakteinrichtung angenähert wird.

Die Ladekontakteinheit kann eine Aufnahmeöffnung für die Kontakteinrichtung ausbilden, wobei die Kontakteinrichtung in die Aufnahmeöffnung der Ladekontakteinheit einsetzbar sein kann. Dabei kann die Aufnahmeöffnung vorzugsweise V-förmig ausgebildet sein. Bei einer Relativabweichung des Kontaktelementträgers bei einem Zusammenführen von Kontakteinrichtung und Ladekontakteinheit zur Aufnahmeöffnung bewirkt dann die V-förmige Ausbildung der Aufnahmeöffnung eine Zentrierung des Kontaktelementträgers.

So kann die Aufnahmeöffnung bei einem Zusammenführen von Kontakteinrichtung und Ladekontakteinheit eine Führung für die Kontakteinrichtung ausbilden. Eventuelle Lageabweichungen des Fahrzeugs bei einem Halt an einer Haltestelle von einer vorgesehenen Halteposition können so durch die durch die Aufnahmeöffnung bewirkte Führung des Kontaktelementträgers in eine Kontaktposition an der Ladekontakteinheit leicht ausgeglichen werden.

Die Ladekontakteinheit kann aus einem Ladekontaktelementträger und den Ladekontaktelementen gebildet sein, wobei der Ladekontaktelementträger aus einem Kunststoffmaterial ausgebildet sein kann. Die Ladekontakteinheit ist dann besonders kostengünstig und einfach herstellbar. So kann der Ladekontaktelementträger auch aus Kunststoff einstückig ausgebildet sein. Die Ladekontaktelemente können dann in den Ladekontaktelementträger bzw. in dafür vorgesehene Halterungen oder Ausnehmungen eingesetzt werden.

Weiter kann die Ladekontakteinheit als eine in Fahrtrichtung des Fahrzeugs anordbare, dachförmige Längsschiene ausgebildet sein. Die Ladekontaktelemente können dann an einer Unterseite der dachförmigen Längsschiene angeordnet sein, sodass die Ladekontaktelemente nicht unmittelbar Witterungseinflüssen ausgesetzt sind. Auch kann die dachförmige Längsschiene vergleichsweise lang ausgebildet sein, sodass eine genaue Positionierung des Fahrzeugs an einer Haltestelle nicht mehr notwendig ist. Auch kann die dachförmige Längsschiene an ihren Enden vorzugsweise offen ausgebildet sein, sodass der Kontaktelementträger auch in Fahrtrichtung in die dachförmige Längsschiene eingeführt bzw. herausgezogen werden kann.

Die Ladekontaktelemente können vorteilhaft als ein Leiterstreifen ausgebildet sein. So können die Ladekontaktelemente dann eine vergleichsweise große, kontaktierbare Fläche für die Kontaktelemente ausbilden. Auch ist ein Leiterstreifen einfach herzustellen, beispielsweise durch die Verwendung eines Halbzeugs als Leiterstreifen. Umgekehrt ist es auch möglich, die Kontaktelemente am Kontaktelementträger als Leiterstreifen auszubilden und die Ladekontaktelemente bolzenförmig bzw. als Bolzen gemäß einer hier vorstehend beschriebenen Ausführungsform des Kontaktelementträgers mit Kontaktelementen auszubilden.

Weiter kann das Schnellladesystem auch eine Ladestation umfassen. Insbesondere ist es nicht zwangsläufig erforderlich, dass jeweils an der Ladekontakteinheit eine Querführung und an dem Kontaktelementträger eine Querführung vorhanden ist. So ist es auch bereits ausreichend, dass an der Ladekontakteinheit oder an dem Kontaktelementträger eine Querführung vorgesehen ist. Wesentlich ist, dass eine Relativbewegung von dem Kontaktelementträger zu dem Pantografen oder der Schwinge und/oder von der Ladekontakteinheit zu deren unmittelbaren Aufhängung über einer Fahrbahn quer zur Fahrtrichtung ermöglicht wird

Weiter ist es nicht zwangsläufig erforderlich, dass die Anordnung der Kontaktelemente an dem Kontaktelementträger und die Anordnung der Ladekontaktelemente an der Ladekontakteinheit jeweils für sich alleine ursächlich für eine definierte Kontaktreihenfolge sind. So können die Anordnung der Kontaktelemente und die Anordnung der Ladekontaktelemente die entsprechende Kontaktreihenfolge bewirken, wobei jedoch dann ein Zusammenspiel der Kontaktvorrichtung und der Ladekontakteinheit bzw. der Kontaktelemente und der Ladekontaktelemente hinsichtlich deren Anordnung so aufeinander abgestimmt sein muss, dass die betreffende Kontaktreihenfolge bewirkt wird.

Bei dem erfindungsgemäßen Verfahren zur Ausbildung einer elektrisch leitenden Verbindung zwischen einem Fahrzeug und einer stationären Ladestation, insbesondere für ein Schnellladesystem für elektrisch angetriebene Fahrzeuge, wie Elektrobusse oder dergleichen, mit einer Kontaktvorrichtung und einer Ladekontakteinheit, ist die Kontaktvorrichtung an einem Fahrzeug angeordnet, wobei die Kontaktvorrichtung eine Kontakteinrichtung oder die Ladekontakteinheit umfasst, wobei mit der Kontakteinrichtung die Ladekontakteinheit der Ladestation kontaktiert wird, wobei die Kontaktvorrichtung eine Positioniereinrichtung umfasst, wobei mittels der Positioniereinrichtung die Kontakteinrichtung relativ zur Ladekontakteinheit positioniert wird, wobei die Positioniereinrichtung einen Pantografen oder eine Schwinge aufweist wobei die Kontakteinrichtung einen Kontaktelementträger mit Kontaktelementen aufweist, wobei die Kontaktelemente mit Ladekontaktelementen der Ladekontakteinheit jeweils zur Ausbildung von Kontaktpaarungen kontaktiert werden, wobei die Kontakteinrichtung und die Ladekontakteinheit zusammengeführt werden, wobei die Positioniereinrichtung eine Querführung aufweist, mittels der der Kontaktelementträger quer zur Ladekontakteinheit bei dem Zusammenführen positioniert wird, wobei die Kontakteinrichtung auf einem Fahrzeugdach unterhalb der Ladekontakteinheit angeordnet wird, wobei mittels dem Pantografen oder der Schwinge die Kontakteinrichtung in vertikaler Richtung relativ zur Ladekontakteinheit positioniert wird, wobei der Kontaktelementträger oder die Ladekontakteinheit quer zur Fahrtrichtung des Fahrzeugs frei an der Querführung verschoben werden. Vorzugsweise weist die Positioniereinrichtung und/oder die Ladekontakteinheit die Querführung auf. Hinsichtlich der vorteilhaften Wirkungen des erfindungsgemäßen Verfahrens wird auf die Vorteilsbeschreibung der erfindungsgemäßen Kontaktvorrichtung bzw. Ladekontakteinheit verwiesen.

Bei dem Verfahren kann zunächst eine erste Kontaktpaarung zwischen einem ersten Kontaktelement und einem ersten Ladekontaktelement ausgebildet werden, bevor eine weitere Kontaktpaarung zwischen einem weiteren Kontaktelement und einem weiteren Ladekontaktelement ausgebildet wird. Im Übrigen kann dann auch vorgesehen sein, dass bei einem Lösen der Kontaktvorrichtung von der Ladekontakteinheit Kontaktpaarungen in umgekehrter Kontaktreihenfolge aufgelöst, also unterbrochen werden.

Vorteilhaft kann zunächst eine Schutzleiterkontaktpaarung vor einer Leistungskontaktpaarung ausgebildet werden. So ist sichergestellt, dass eventuelle Fehlkontaktierungen von Leistungskontakten nicht zu eventuellen Schäden oder Gefährdungen von Personen führen können.

Weiter kann zunächst eine Leistungskontaktpaarung vor einer Steuerleiterkontaktpaarung ausgebildet werden. Nach der sicheren Ausbildung der Steuerleiterkontaktpaarung kann dann ein Schnellladevorgang aktiviert werden. So wird eine noch sicherere Kontaktierung bzw. Schnellladung ermöglicht, da dann erst elektrische Energie über die Leistungskontaktpaarungen geleitet wird, wenn die Steuerleiterkontaktpaarung ausgebildet ist und eine Steuerung bzw. Überwachung des Schnellladevorgangs ermöglicht. So kann auch ein eventueller Funkenüberschlag oder Ähnliches bei Ausbildung der Leistungskontaktpaarungen vermieden werden.

Weitere vorteilhafte Ausführungsformen des Verfahrens ergeben sich aus den auf den Vorrichtungsanspruch 1 rückbezogenen Unteransprüchen.

Nachfolgend wird eine bevorzugte Ausführungsform der Erfindung unter Bezugnahme auf die beigefügte Zeichnung näher erläutert.

Es zeigen:
- **Fig. 1**: eine Ausführungsform eines Schnellladesystems in einer Seitenansicht;
- **Fig. 2**: das Schnellladesystem in einer Vorderansicht;
- **Fig. 3**: eine Ladekontakteinheit des Schnellladesystems in einer perspektivischen Ansicht;
- **Fig. 4**: die Ladekontakteinheit in einer Querschnittansicht;
- **Fig. 5**: einen Kontaktelementträger einer Kontaktvorrichtung des Schnellladesystems in einer perspektivischen Ansicht;
- **Fig. 6**: eine Schnittansicht des Kontaktelementträgers entlang einer Linie **VI** - **VI** aus **Fig. 9**;
- **Fig. 7**: eine Vorderansicht des Kontaktelementträgers;
- **Fig. 8**: eine Seitenansicht des Kontaktelementträgers;
- **Fig. 9**: eine Draufsicht des Kontaktelementträgers;
- **Fig. 10**: eine Querführung der Kontaktvorrichtung des Schnellladesystems in einer perspektivischen Ansicht;
- **Fig. 11**: eine zweite Ausführungsform eines Schnellladesystems in einer Vorderansicht;
- **Fig. 12**: eine dritte Ausführungsform eines Schnellladesystems in einer perspektivischen Ansicht;
- **Fig. 13**: die dritte Ausführungsform des Schnellladesystems in einer Vorderansicht;
- **Fig. 14**: eine vierte Ausführungsform des Schnellladesystems in einer Draufsicht;
- **Fig. 15**: die vierte Ausführungsform des Schnellladesystems in einer Vorderansicht;
- **Fig. 16**: die vierte Ausführungsform des Schnellladesystems in einer Seitenansicht;
- **Fig. 17**: eine Lagervorrichtung in einer perspektivischen Ansicht;
- **Fig. 18**: die Lagervorrichtung in einer Seitenansicht;
- **Fig. 19**: die Lagervorrichtung in einer Unteransicht;
- **Fig. 20**: die Lagervorrichtung in einer Vorderansicht.

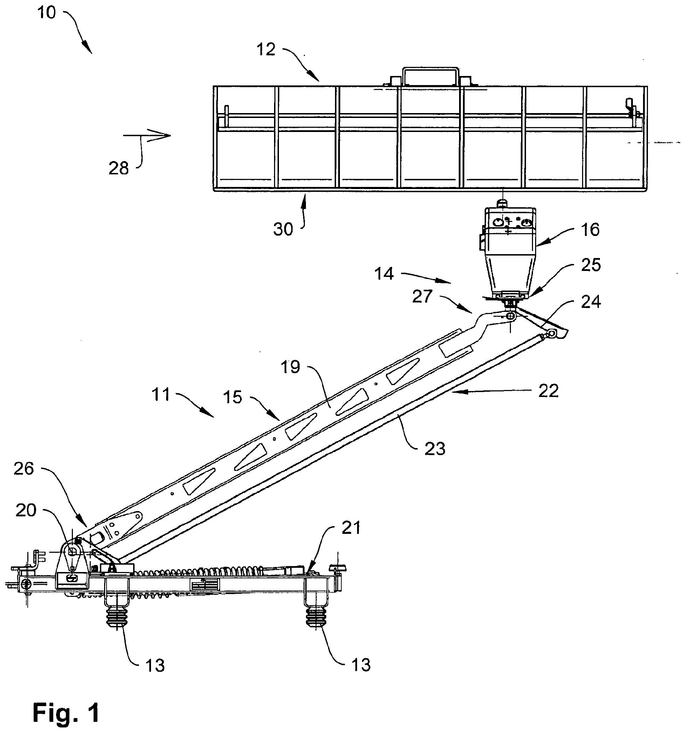

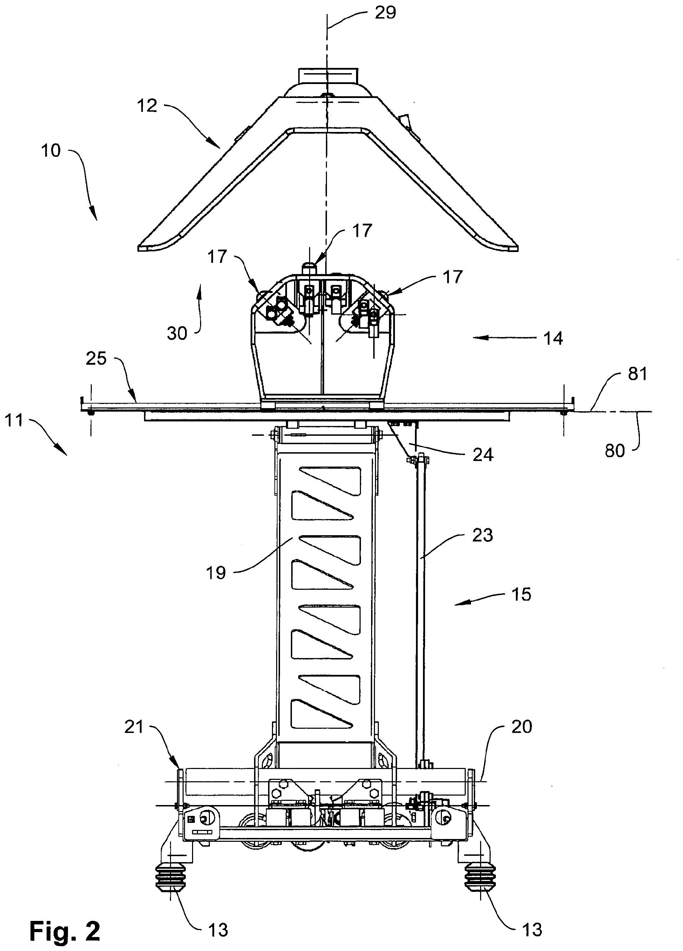

Eine Zusammenschau der **Fig. 1** und **2** zeigt ein Schnellladesystem 10, gebildet aus einer Kontaktvorrichtung 11 und einer Ladekontakteinheit 12. Eine Lagervorrichtung ist hier der Einfachheit halber nicht dargestellt, kann jedoch vorhanden sein. Die Kontaktvorrichtung 11 ist über elektrisch isolierte Füße 13 auf einem Dach eines hier nicht näher dargestellten Fahrzeugs bzw. Elektrobusses befestigt. Die Ladekontakteinheit 12 ist mittels einer hier nicht näher dargestellten Aufhängevorrichtung oberhalb des Elektrobusses im Bereich einer Haltestelle des Elektrobusses aufgehängt. Die Kontaktvorrichtung 11 umfasst eine Kontakteinrichtung 14, mit der die Ladekontakteinheit 12 kontaktierbar ist, sowie eine Positioniereinrichtung 15, mit der die Kontakteinrichtung 14 relativ zur Ladekontakteinheit 12 positioniert werden kann. Die Kontakteinrichtung 14 umfasst weiter einen Kontaktelementträger 16 mit Kontaktelementen 17, die mit Ladekontaktelementen 18 der Ladekontakteinheit 12 kontaktiert werden können. Die Positioniereinrichtung 15 weist in der hier gezeigten Ausführungsform eine Schwinge 19 auf, welche über ein Drehlager 20 an einem Befestigungsrahmen 21 der Kontaktvorrichtung 11 verschwenkt werden kann. Weiter ist ein Koppelgetriebe 22 der Positioniereinrichtung 15 vorgesehen, bei dem ein Stab 23 des Koppelgetriebes 22 an einen Hebel 24 einer Querführung 25 der Positioniereinrichtung 15 angeschlossen ist. Bei einem Verschwenken der Schwinge 19 um das Drehlager 20 an einem unteren Ende 26 der Schwinge 19 wird über das Koppelgetriebe 22 die an einem oberen Ende 27 der Schwinge 19 angeordnete Querführung 25 über das Koppelgetriebe 22 stets in einer horizontalen Lage gehalten. Demnach kann der Kontaktelementträger 16 bei dem Verschwenken auch nicht relativ zu einer horizontalen Ebene 80 verkippen. Der Kontaktelementträger 16 ist an der Querführung 25 quer zu einer hier mit Pfeil 28 angedeuteten Fahrtrichtung frei verschieblich angeordnet. So kann sichergestellt werden, dass der Kontaktelementträger 16 bei einem Zusammenführen von Kontaktelementträger 16 und Ladekontakteinheit 12 sich relativ zu einer Hochachse 29 der Ladekontakteinheit 12 frei ausrichten kann, wenn der Kontaktelementträger 16 nicht unmittelbar fluchtend mit der Hochachse 29 bei einem Halt des Elektrobusses positioniert wurde. Auch nach einem Kontaktieren der Ladekontakteinheit 12 durch Positionieren des Kontaktelementträgers 16 in einer Aufnahmeöffnung 30 der Ladekontakteinheit 12 kann der Elektrobus durch ein einseitiges Absenken relativ zur Hochachse 29 ggf. verkippt werden, wobei dann der Kontaktelementträger 16 quer zur Fahrtrichtung des Elektrobusses an der Querführung 25 frei verschoben werden kann. Insbesondere wird bei dem Absenken die Schwinge 19 um einen nicht dargestellten Winkel relativ zur Hochachse 29 verkippt.

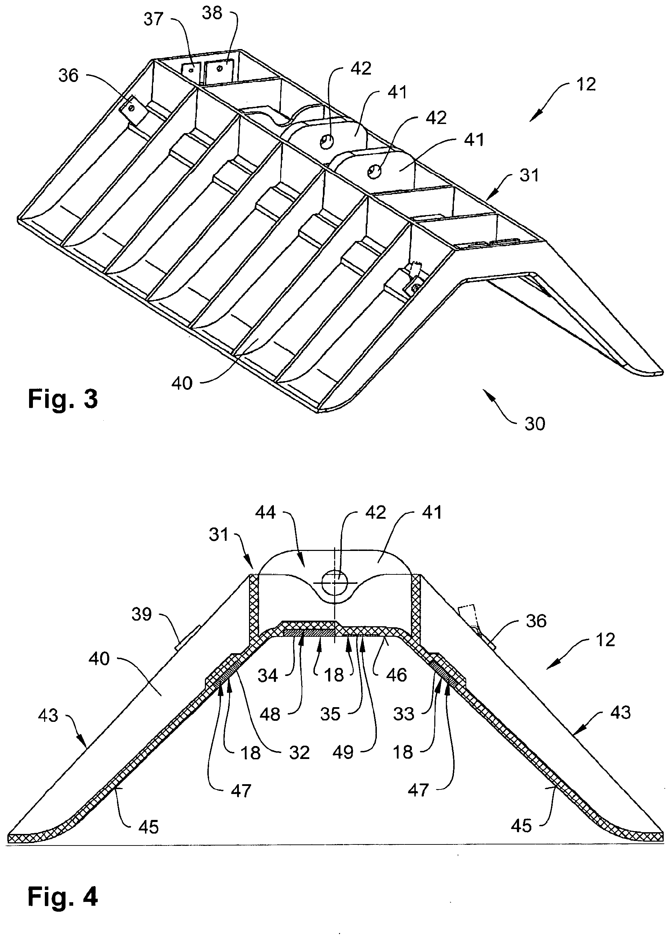

Eine Zusammenschau der **Fig. 3** und **4** zeigt die Ladekontakteinheit 12, welche im Wesentlichen aus einem Ladekontaktelementträger 31 aus Kunststoffmaterial und dem Ladekontaktelement 18 ausgebildet ist. Die Ladekontaktelemente 18 sind ihrerseits jeweils als Leiterstreifen 32, 33, 34 und 35 ausgebildet und verlaufen in Längsrichtung des Ladekontaktelementträgers 31. Die Leiterstreifen 32 und 33 dienen zur Übertragung eines Ladestroms, wobei der Leiterstreifen 34 einen Schutzleiter und der Leiterstreifen 35 eine Steuerleitung repräsentiert. Im Übrigen sind Kontaktfahnen 36 bis 39 zum Anschluss an hier nicht näher dargestellte Leitungen vorgesehen. Der Ladekontaktelementträger 31 ist im Wesentlichen einstückig ausgebildet und weist unter anderem Verstärkungsrippen 40 sowie Befestigungsrippen 41 mit Durchgangsöffnungen 42 zur Aufhängung des Ladekontaktelementträgers 31 an einem hier nicht näher dargestellten Mast oder Ähnlichem auf. Die Aufnahmeöffnung 30 ist V-förmig ausgebildet, derart, dass zwei symmetrische Schenkel 43 über einen horizontalen Steg 44 miteinander verbunden sind. Die Befestigungsrippen 41 bilden unter anderem den Steg 44, und die Verstärkungsrippen 40 die Schenkel 43 aus. Innerhalb der Aufnahmeöffnung 30 bildet die Ladekontakteinheit 12 Anlageflächen 45 und 46 für den Kontaktelementträger 16 aus. Innerhalb der Anlageflächen 45 an den Schenkeln 43 sind jeweils Ausnehmungen 47 zur flächenbündigen Aufnahme der Leiterstreifen 32 bzw. 33 ausgebildet, wobei innerhalb der Anlagefläche 46 des Stegs 44 Ausnehmungen 48 und 49 zur flächenbündigen Aufnahme der Leiterstreifen 34 bzw. 35 ausgebildet sind.

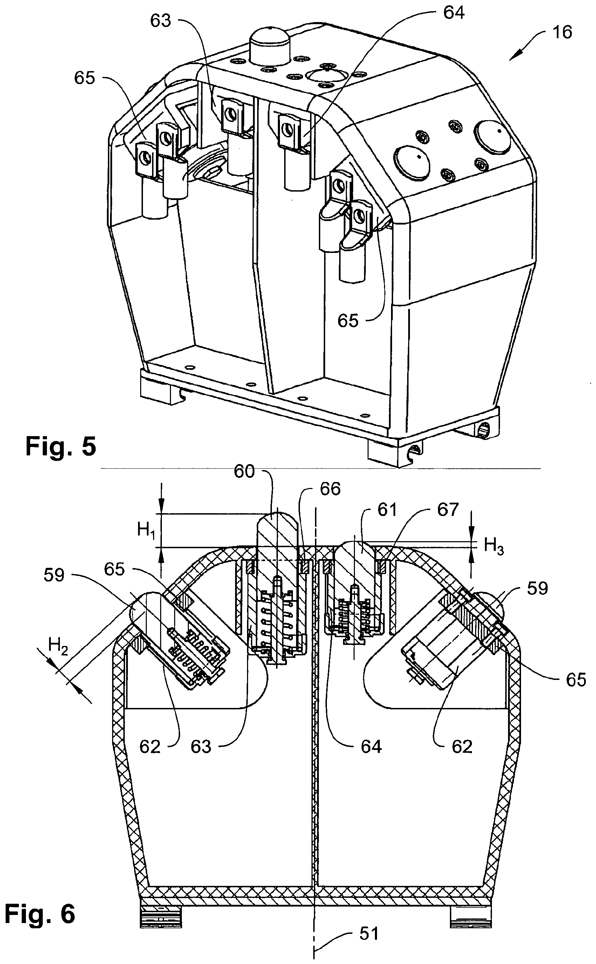

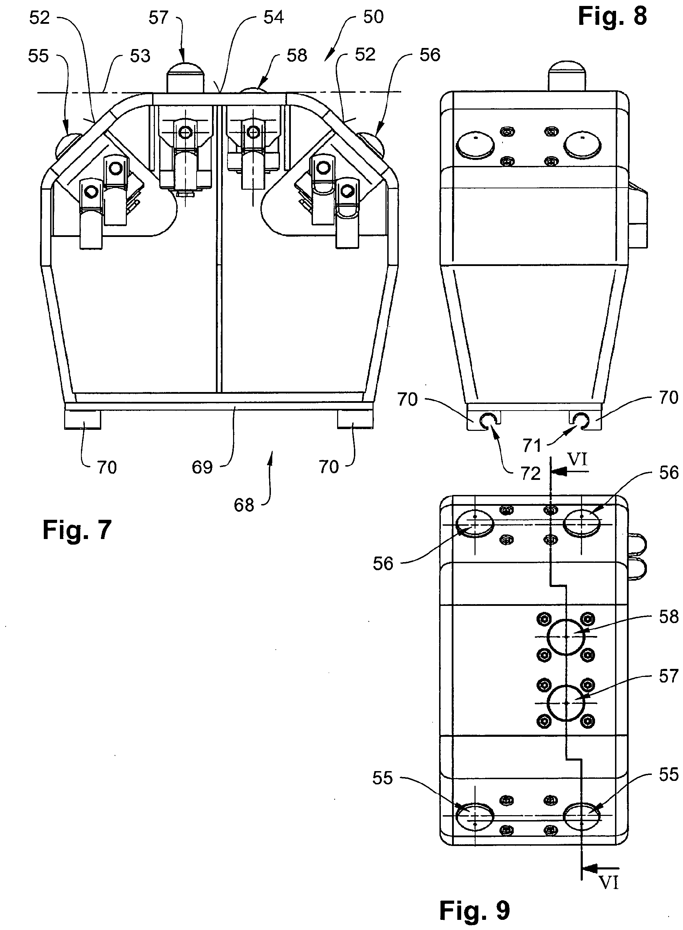

Eine Zusammenschau der **Fig. 5** bis **9** zeigt den Kontaktelementträger 16 in verschiedenen Ansichten. Der Kontaktelementträger ist an einem oberen Ende 50 relativ bezogen auf eine Hochachse 51 V-förmig in Übereinstimmung mit der Aufnahmeöffnung 30 der Ladekontakteinheit 12 ausgebildet. Zwei Positionierflächen 52 sind relativ zu einer horizontalen Ebene 53 schräg ausgebildet und über eine horizontale Positionierfläche 54 untereinander verbunden. Die Positionierflächen 52 können folglich an den Anlageflächen 45 und die Positionierfläche 54 an der Anlagefläche 46 zur Anlage gelangen. Innerhalb der Positionierflächen 52 sind jeweils zwei Kontaktelemente 17 angeordnet, die als Leistungskontaktelemente 55 bzw. 56 ausgebildet sind. In der Positionierfläche 54 sind zwei Kontaktelemente 17 angeordnet, die als Schutzleiterkontaktelement 57 und Steuerleiterkontaktelement 58 ausgebildet sind. Die Leistungskontaktelemente 55 und 56 weisen elektrisch leitende Bolzen 59, das Schutzleiterkontaktelement 57 einen Bolzen 60, und das Steuerleiterkontaktelement 58 einen Bolzen 61 auf. Die Bolzen 59 bis 61 sind jeweils in Hülsen 62, 63 bzw. 64 längsbeweglich federnd gelagert. Insbesondere der Bolzen 60 überragt die Positionierfläche 54 mit einer Höhe H₁, wobei die Bolzen 59 die Positionierflächen 52 mit einer Höhe H₂ überragen und der Bolzen 61 die Positionierfläche 54 mit einer Höhe H₃ überragt. Dabei ist die Höhe H₁ größer als die Höhe H₂, und die Höhe H₂ größer als die Höhe H₃. Durch die unterschiedlichen Höhen H₁ bis H₃ bedingt, kommt es bei einem Zusammenführen von Kontaktvorrichtung 11 und Ladekontakteinheit 12, bzw. einem Einführen der Kontakteinrichtung 14 in die Aufnahmeöffnung 30, zwangsläufig zu einer definierten Kontaktreihenfolge der Bolzen 59 bis 61 mit den Leiterstreifen 32 bis 35, wobei zunächst eine erste Kontaktpaarung zwischen dem Bolzen 60 und dem Leiterstreifen 34, dann vier zweite Kontaktpaarungen über die Bolzen 59 mit den Leiterstreifen 32 und 33, und abschließend eine dritte Kontaktpaarung mit dem Bolzen 61 und dem Leiterstreifen 35 ausgebildet wird. Bei einem Absenken der Schwinge 19 werden diese Kontaktpaarungen in der umgekehrten Reihenfolge gelöst. Die Kontakteinrichtung weist im Übrigen Kontaktfahnen 65, 66 und 67 zum Anschluss von hier nicht näher dargestellten Leitungen auf. Die Kontaktfahne 65 ist mit der Hülse 62, die Kontaktfahne 66 mit der Hülse 63 und die Kontaktfahne 67 mit der Hülse 64 elektrisch leitend verbunden. An einem unteren Ende 68 der Kontakteinrichtung 14 ist eine Fußplatte 69 mit Gleitfüßen 70 angeordnet. Die Gleitfüße 70 bilden jeweils eine Halteöffnung 71 mit einer Gleitfläche 72 aus. Über die Gleitfüße 70 ist die Kontakteinrichtung 14 mit der Querführung 25 verbunden.

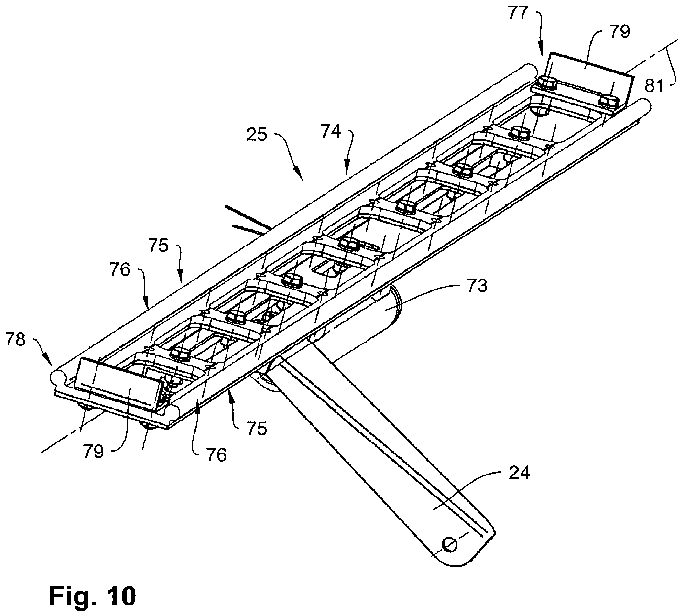

Die **Fig. 10** zeigt eine perspektivische Ansicht der Querführung 25 mit dem Hebel 24 des Koppelgetriebes 22. Weiter ist eine Nabe 73 zur drehbaren Verbindung der Querführung 25 mit der Schwinge 19 vorgesehen. Die Querführung 25 ist im Wesentlichen aus einem Längsprofil 74 gebildet, welches entlang von Längskanten 75 Führungsbahnen 76 für die Gleitfüße 70 ausbildet. Die Führungsbahnen 76 haben im Wesentlichen eine runde Querschnittsform, die übereinstimmend zur Halteöffnung 71 der Gleitfüße 70 ausgebildet ist. Durch eine Dreiviertelkreisform der Halteöffnung 71 kann so gewährleistet werden, dass die Gleitfüße 70 formschlüssig mit der Führungsbahn 76 verbunden sind und entlang der Führungsbahn 76 verschoben werden können. An den jeweiligen Enden 77 und 78 des Längsprofils 74 sind Anschläge 79 befestigt, die ein Herunterschieben der Kontakteinrichtung 14 von der Querführung 25 verhindern. Die Kontakteinrichtung 14 ist so entlang einer gesamten Länge der Querführung 25 bzw. des Längsprofils 74 frei verschiebbar. Insbesondere, wenn die Querführung 25 relativ zu einer horizontalen Ebene 80 mit ihrer Längsachse 81 durch ein einseitiges Absenken eines Elektrobusses um einen Winkel verschwenkt wird, erfolgt auch eine Verschiebung des Längsprofils 74 entlang der Längsachse 81, sodass diese Verschiebung durch eine Verschiebung um den gleichen Betrag der Kontakteinrichtung entlang der Führungsbahn 76 kompensiert werden kann.

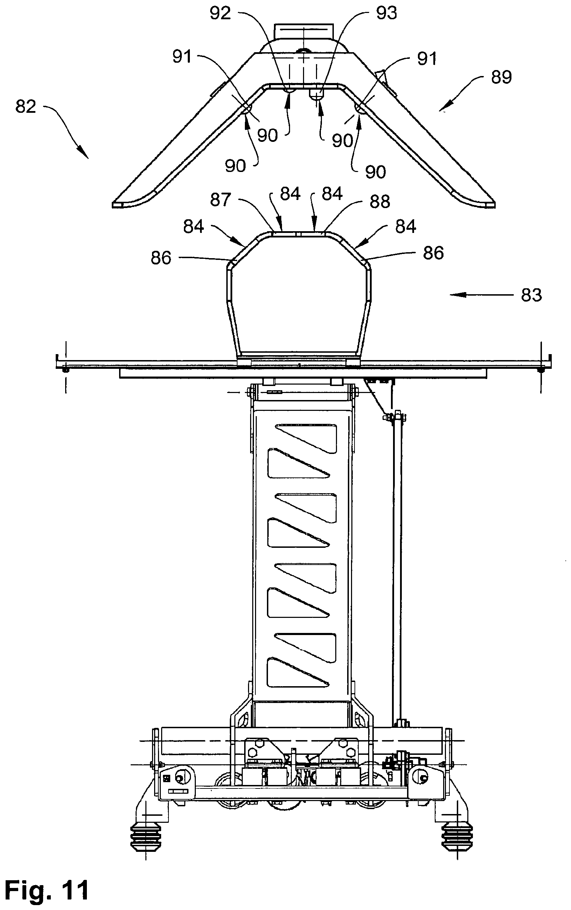

Die **Fig. 11** zeigt eine weitere Ausführungsform eines Schnellladesystems 82, welches im Unterschied zu dem in **Fig. 1** bis **10** beschriebenen Schnellladesystem eine Kontakteinrichtung 83 aufweist, die über Kontaktelemente 84 verfügt, die als Leiterstreifen 85, 86, 87 und 88 ausgebildet sind. Eine Ladekontakteinheit 89 weist Ladekontaktelemente 90 auf, die als Bolzen 91, 92 und 93 ausgebildet sind. Eine Kontaktierung kann auch hier wie zuvor beschrieben erfolgen.

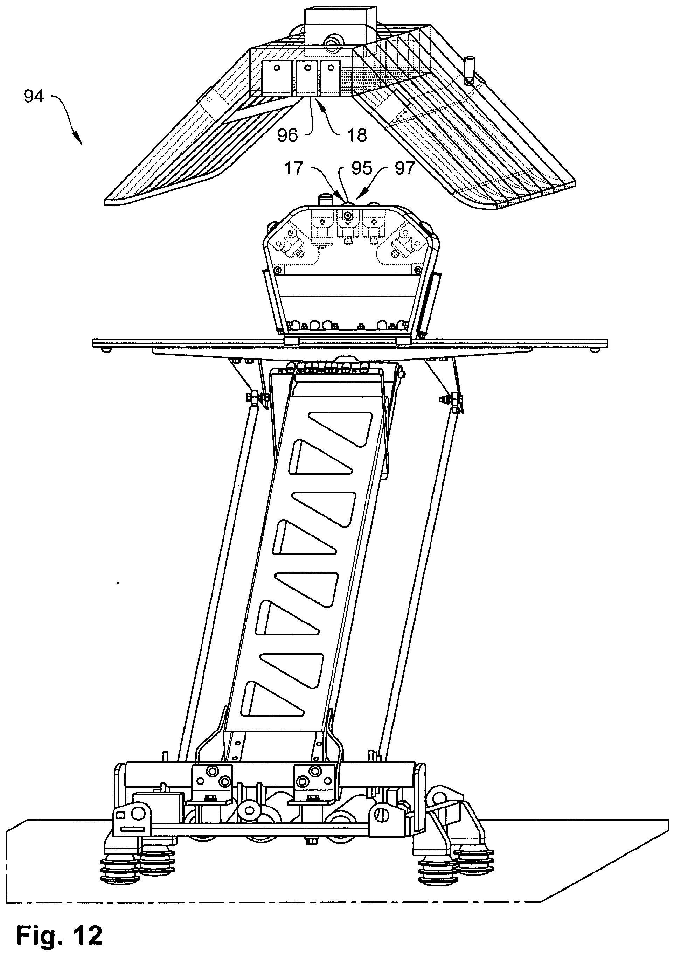

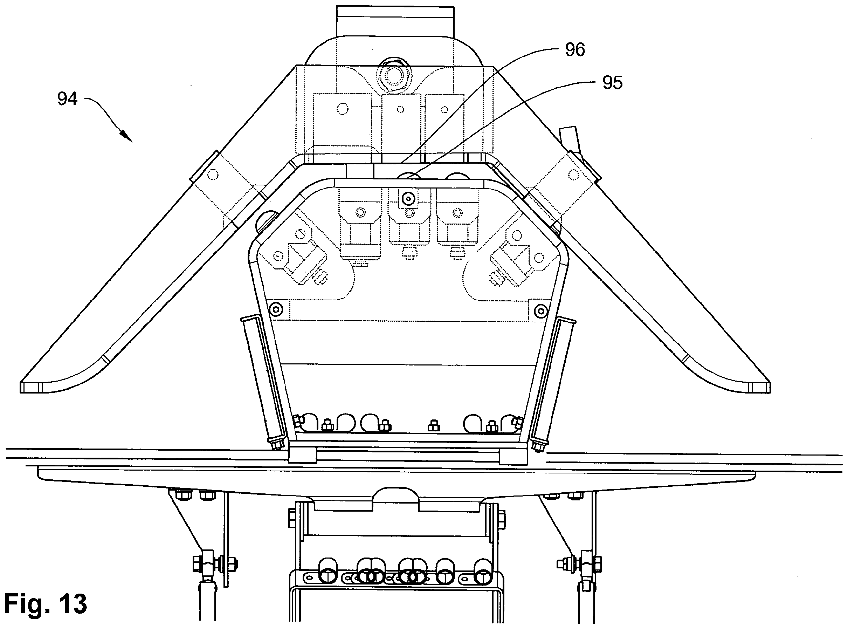

Die **Fig. 12** und **13** zeigen eine dritte Ausführungsform eines Schnellladesystems 94, welches im Unterschied zu dem in den **Fig. 1** bis **10** beschriebenen Schnellladesystem mit einem Bolzen 95 ein weiteres Kontaktelement 17 und mit einem Leiterstreifen 96 ein weiteres Ladekontaktelement 18 aufweist. Der Bolzen 95 bildet ein Verriegelungskontaktelement 97 aus. Mit dem Verriegelungskontaktelement 97 ist insbesondere eine sichere Datenverbindung mit einer stationären Ladestation herstellbar.

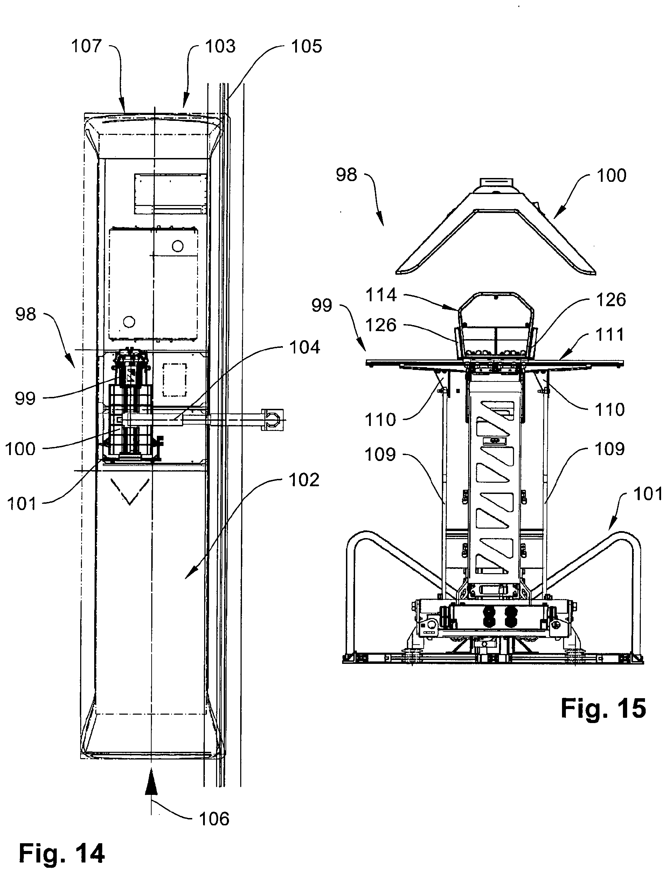

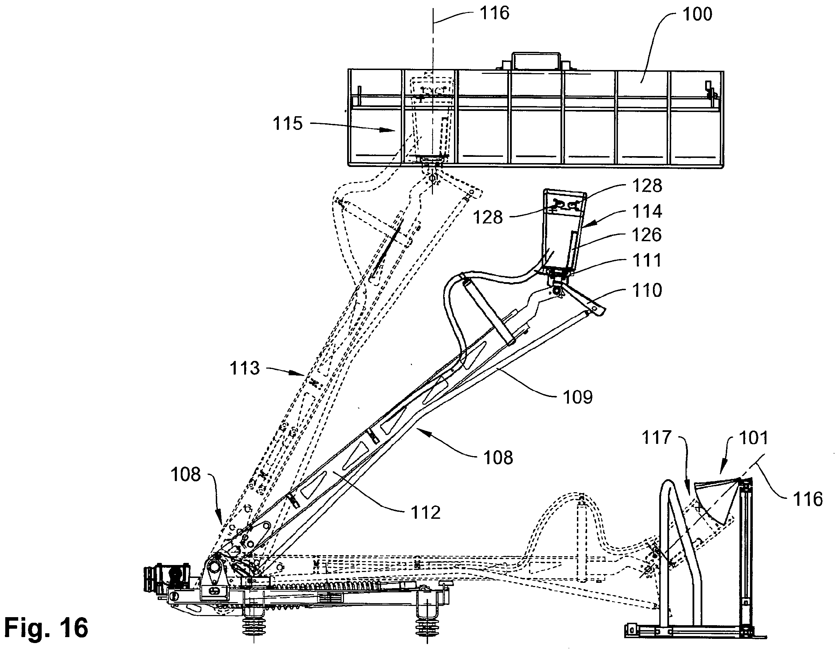

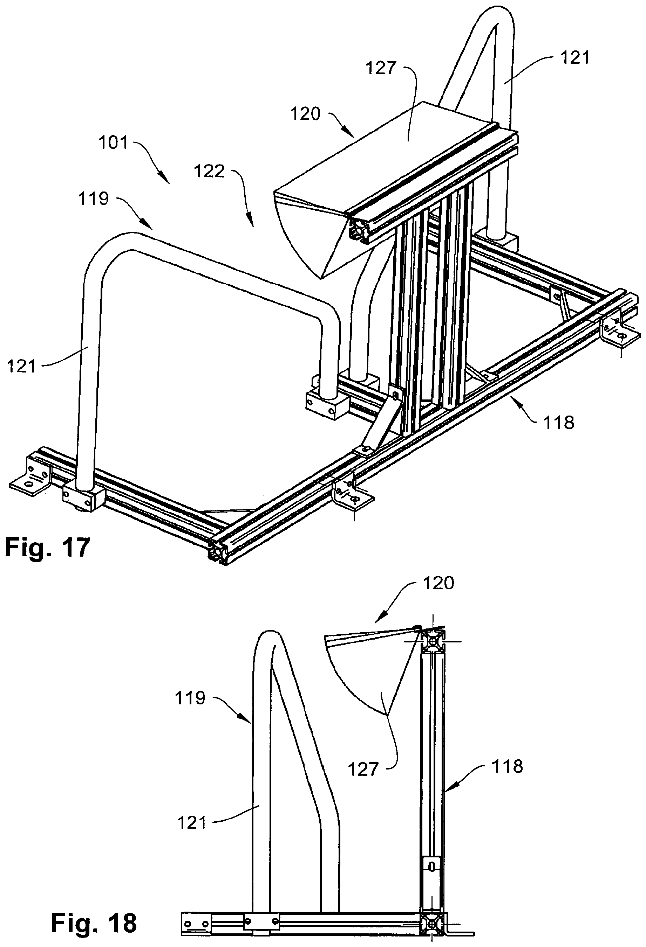

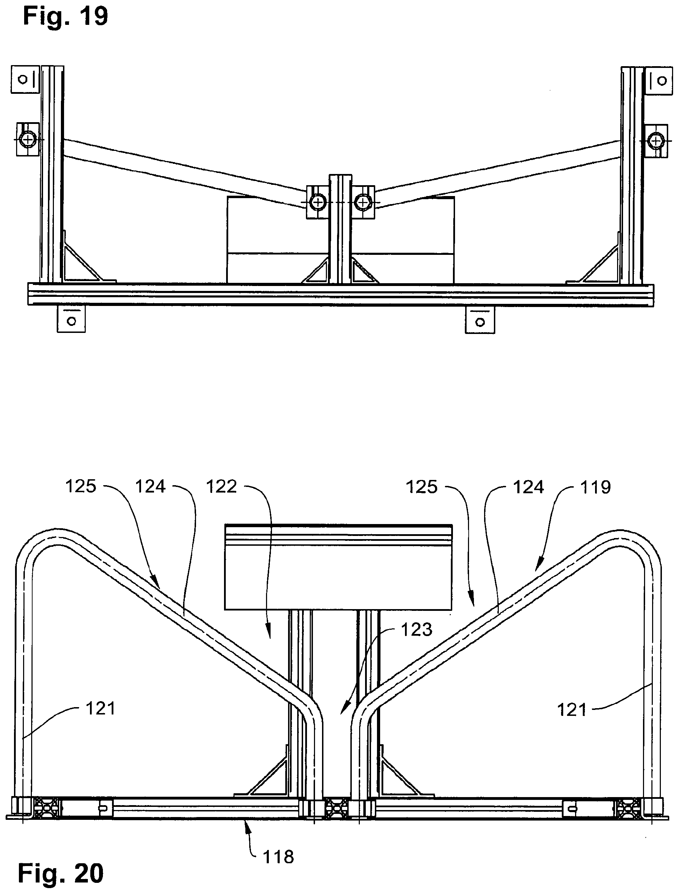

Eine Zusammenschau der **Fig. 14** bis **16** zeigt eine vierte Ausführungsform eines Schnellladesystems 98 mit einer Kontaktvorrichtung 99 und einer Ladekontakteinheit 100 in verschiedenen Ansichten. Weiter umfasst das Schnellladesystem 98 eine Lagervorrichtung 101, die in den Figuren 17 bis 20 noch einmal näher dargestellt ist. Die Kontaktvorrichtung 99 ist, wie in Figur 14 gezeigt, auf einem Dach 102 eines Fahrzeugs 103 zusammen mit der Lagervorrichtung 101 angeordnet. Die Ladekontakteinheit 100 ist an einem Mast 104 gehaltert und oberhalb der Kontaktvorrichtung 99 positioniert. Das Fahrzeug 103 ist dabei an einem Bordstein 105 bzw. parallel zu diesem abgestellt, wobei eine Fahrtrichtung des Fahrzeugs 103 mit einem Pfeil 106 gekennzeichnet ist. Die Kontaktvorrichtung 99 und die Lagervorrichtung 101 sind relativ zu der Fahrtrichtung auf einer linken Hälfte 107 des Fahrzeugs 103 angeordnet, in der sich auch ein nicht dargestelltes Steuer für das Fahrzeug 103 befindet.

Prinzipiell ist das Schnellladesystem 98 ähnlich dem in den **Fig. 1** bis **10** beschriebenen Schnellladesystem ausgebildet. Im Unterschied zu dem Schnellladesystem sind hier ein Koppelgetriebe 108 mit zwei Stäben 109 vorgesehen. Die Stäbe 109 sind jeweils mit Hebeln 110 drehbar verbunden, wobei die Hebel 110 mit einer Querführung 111, die schwenkbar an eine Schwinge 112 einer Positioniereinrichtung 113 angeordnet ist, fest verbunden sind. An der Querführung 111 ist eine Kontakteinrichtung 114 quer zur Fahrtrichtung des Fahrzeugs 103 frei verschiebbar angeordnet, wobei die Kontakteinrichtung 114 in einer oberen Kontaktposition 115 mit einer Hochachse 116 der Kontakteinrichtung 114 vertikal positioniert ist, und wobei die Kontakteinrichtung 114 in einer unteren Lagerposition 117 relativ zu dem Dach 102 des Fahrzeugs 103 mit der Hochachse 116 geneigt positioniert ist. Die Schwinge 112 ist dabei im Wesentlichen horizontal ausgerichtet.

Die Lagervorrichtung 101 ist im Wesentlichen aus einem Grundrahmen 118 zur Montage der Lagervorrichtung 101 auf dem Dach 102 des Fahrzeugs 103 sowie einer Führungseinrichtung 119 und einer Reinigungseinrichtung 120 gebildet. Die Führungseinrichtung 119 besteht aus zwei gebogenen Rohrprofilen 121, die so gebogen und angeordnet sind, dass eine V-förmige Aufnahmeöffnung 122 für die Kontakteinrichtung 114 ausgebildet wird. Weiter wird in der Lagerposition 117 eine Linearführung 123 in einer vertikalen Richtung ausgebildet. Insbesondere Rohrabschnitte 124 der Rohrprofile 121 bilden eine Führungsbahn 125 für Rollen 126, die an der Kontakteinrichtung 114 angeordnet sind, aus, so dass die Rollen 126 an den Führungsbahnen 125 abwälzen bzw. entlang gleiten können. Die Kontakteinrichtung 114 wird bei einem Absenken in die Lagerposition 117 in der Führungseinrichtung 119 mittig zentriert, derart, dass die Kontakteinrichtung 114 an der Querführung 111 ebenfalls zentriert wird. Beim Anfahren einer hier nicht gezeigten Ladekontakteinheit ist dann die Kontakteinrichtung 114 an der Querführung 111 wieder so ausgerichtet, dass die Kontakteinrichtung 114 in die entsprechende Ladekontakteinheit eingeführt werden kann.

Die Reinigungseinrichtung 120 ist im Wesentlichen aus einer Bürste 127 gebildet, die so an dem Grundrahmen 118 angeordnet ist, dass Kontaktelemente 128 mit der Bürste 127 in der Lagerposition 117 in Kontakt gelangen bzw. von der Bürste 127 jeweils bei einer Bewegung in die Lagerposition 117 und aus der Lagerposition 117 heraus gereinigt werden.

## Patentansprüche

1. Schnellladesystem (10, 82, 94, 98) für elektrisch angetriebene Fahrzeuge, insbesondere Elektrobusse oder dergleichen, mit einer Kontaktvorrichtung (11, 99) und einer Ladekontakteinheit (12, 89, 100), wobei die Kontaktvorrichtung zur Ausbildung einer elektrischen leitenden Verbindung zwischen einem Fahrzeug und einer stationären Ladestation mit einer Ladekontakteinheit (12, 89, 100) dient, wobei die Kontaktvorrichtung an einem Fahrzeug (103) anordbar ist, wobei die Kontaktvorrichtung eine Kontakteinrichtung (14, 83, 114) umfasst, wobei mit der Kontakteinrichtung die Ladekontakteinheit kontaktierbar ist, wobei die Kontaktvorrichtung oder die Ladekontakteinheit eine Positioniereinrichtung (15, 113) umfasst, wobei mittels der Positioniereinrichtung die Kontakteinrichtung relativ zur Ladekontakteinheit positionierbar ist, wobei die Positioniereinrichtung einen Pantografen oder eine Schwinge (19, 112) aufweist, wobei die Kontakteinrichtung einen Kontaktelementträger (16) mit Kontaktelementen (17, 84, 128) aufweist, wobei die Kontaktelemente mit Ladekontaktelementen (18, 90) der Ladekontakteinheit jeweils zur Ausbildung von Kontaktpaarungen kontaktierbar sind, wobei die Positioniereinrichtung eine Querführung (25, 111) aufweist, mittels der der Kontaktelementträger quer relativ zur Ladekontakteinheit positionierbar ist, wobei die Querführung an einem distalen, kontaktseitigen Ende des Pantografen oder der Schwinge (19, 112) angeordnet ist,
**dadurch gekennzeichnet,**
**dass** die Kontakteinrichtung auf einem Fahrzeugdach (102) unterhalb der Ladekontakteinheit anordbar ist, wobei mittels dem Pantografen oder der Schwinge die Kontakteinrichtung in vertikaler Richtung relativ zur Ladekontakteinheit positionierbar ist, wobei der Kontaktelementträger oder die Ladekontakteinheit quer zur Fahrtrichtung des Fahrzeugs frei verschieblich an der Querführung angeordnet ist.

2. Schnellladesystem nach Anspruch 1,
**dadurch gekennzeichnet,**
**dass** die Kontaktelemente (17, 84) so an dem Kontaktelementträger (16) relativ zu den Ladekontaktelementen (18, 90) angeordnet sind, dass bei einem Zusammenführen von Kontakteinrichtung (14, 83) und Ladekontakteinheit (12, 89, 100) eine definierte Reihenfolge bei der Ausbildung von Kontaktpaarungen eingehalten wird.

3. Schnellladesystem nach Anspruch 1 oder 2,
**dadurch gekennzeichnet,**
**dass** der Kontaktelementträger (16) zwei, vorzugsweise drei Positionierflächen (52, 54) ausbildet, die übereinstimmend mit Anlageflächen (45, 46) der Ladekontakteinheit (12, 89, 100) zur Anlage des Kontaktelementträgers ausgebildet sind.

4. Schnellladesystem nach einem der vorangehenden Ansprüche,
**dadurch gekennzeichnet,**
**dass** die Kontaktelemente (17, 128) bolzenförmig ausgebildet sind, wobei die Kontaktelemente am Kontaktelementträger (16) federnd gelagert sind.

5. Schnellladesystem nach einem der vorangehenden Ansprüche,
**dadurch gekennzeichnet,**
**dass** zumindest zwei Kontaktelemente (17, 128) relativ zu einer Oberfläche des Kontaktelementträgers (16) in unterschiedlichen Höhen (H₁, H₂, H₃) hervorstehen.

6. Schnellladesystem nach einem der vorangehenden Ansprüche,
**dadurch gekennzeichnet,**
**dass** die Ladekontakteinheit (12, 89, 100) eine Aufnahmeöffnung (30) für die Kontakteinrichtung (14, 83, 114) ausbildet, wobei die Kontakteinrichtung in die Aufnahmeöffnung der Ladekontakteinheit einsetzbar ist.

7. Schnellladesystem nach Anspruch 6,
**dadurch gekennzeichnet,**
**dass** die Aufnahmeöffnung (30) bei einem Zusammenführen von Kontakteinrichtung (14, 83, 114) und Ladekontakteinheit (12, 89, 100) eine Führung für die Kontakteinrichtung ausbildet.

8. Schnellladesystem nach einem der vorangehenden Ansprüche,
**dadurch gekennzeichnet,**
**dass** die Ladekontakteinheit (12, 89, 100) aus einem Ladekontaktelementträger (31) und den Ladekontaktelementen (18, 90) gebildet ist, wobei der Ladekontaktelementträger aus einem Kunststoffmaterial ausgebildet ist.

9. Schnellladesystem nach einem der vorangehenden Ansprüche,
**dadurch gekennzeichnet,**
**dass** die Ladekontakteinheit (12, 89, 100) als eine in einer Fahrtrichtung (106) des Fahrzeuges (103) anordbare, dachförmige Längsschiene ausgebildet ist.

10. Schnellladesystem nach einem der vorangehenden Ansprüche,
**dadurch gekennzeichnet,**
**dass** die Ladekontaktelemente (18) als Leiterstreifen (32, 33, 34, 35, 96) ausgebildet sind.

11. Verfahren zur Ausbildung einer elektrischen leitenden Verbindung zwischen einem Fahrzeug und einer stationären Ladestation, insbesondere für ein Schnellladesystem (10, 82, 94, 98) für elektrisch angetriebene Fahrzeuge, wie Elektrobusse oder dergleichen, mit einer Kontaktvorrichtung (11, 99) und einer Ladekontakteinheit (12, 89), wobei die Kontaktvorrichtung an einem Fahrzeug (103) angeordnet ist, wobei die Kontaktvorrichtung eine Kontakteinrichtung (14, 83, 114) umfasst, wobei mit der Kontakteinrichtung die Ladekontakteinheit der Ladestation kontaktiert wird, wobei die Kontaktvorrichtung oder die Ladekontakteinheit eine Positioniereinrichtung (15, 113) umfasst, wobei mittels der Positioniereinrichtung die Kontakteinrichtung relativ zur Ladekontakteinheit positioniert wird, wobei die Positioniereinrichtung einen Pantografen oder eine Schwinge (19, 112) aufweist, wobei die Kontakteinrichtung einen Kontaktelementträger (16) mit Kontaktelementen (17, 84, 128) aufweist, wobei die Kontaktelemente mit Ladekontaktelementen (18, 90) der Ladekontakteinheit jeweils zur Ausbildung von Kontaktpaarungen kontaktiert werden, wobei Kontakteinrichtung und die Ladekontakteinheit zusammengeführt werden, wobei die Positioniereinrichtung eine Querführung (25, 111) aufweist, mittels der der Kontaktelementträger quer relativ zur Ladekontakteinheit bei dem Zusammenführen positioniert wird,
**dadurch gekennzeichnet,**
**dass** die Kontakteinrichtung auf einem Fahrzeugdach (102) unterhalb der Ladekontakteinheit angeordnet wird, wobei mittels dem Pantografen oder der Schwinge die Kontakteinrichtung in vertikaler Richtung relativ zur Ladekontakteinheit positioniert wird, wobei der Kontaktelementträger oder die Ladekontakteinheit quer zur Fahrtrichtung des Fahrzeugs frei an der Querführung verschoben werden.

12. Verfahren nach Anspruch 11,
**dadurch gekennzeichnet,**
**dass** zunächst eine erste Kontaktpaarung zwischen einem ersten Kontaktelement (17, 84, 128) und einem ersten Ladekontaktelement (18, 90) ausgebildet wird, bevor eine weitere Kontaktpaarung zwischen einem weiteren Kontaktelement (17, 84, 128) und einem weiteren Ladekontaktelement (18, 90) ausgebildet wird.

## Claims

1. A rapid charging system (10, 82, 94, 98) for electrically driven vehicles, in particular electric buses or the like, the rapid charging system comprising a contact apparatus (11, 99) and a charging contact unit (12, 89, 100), wherein the contact apparatus serves to form an electrical conductive connection between a vehicle and a stationary charging station comprising a charging contact unit (12, 89, 100), wherein the contact apparatus can be arranged on a vehicle (103), wherein the contact apparatus comprises a contact device (14, 83, 114), wherein the contact device can make contact with the charging contact unit, wherein the contact apparatus or the charging contact unit comprises a positioning device (15, 113), wherein the contact device can be positioned relative to the charging contact unit by means of the positioning device, wherein the positioning device has a pantograph or a swing arm (19, 112), wherein the contact device has a contact element support (16) comprising contact elements (17, 84, 128), wherein the contact elements can make contact with charging contact elements (18, 90) of the charging contact unit so as to form contact pairs, wherein the positioning device has a transverse guide (25, 111), by means of which the contact element support can be positioned transversely relative to the charging contact unit, wherein the transverse guide is arranged at a contact-side distal end of the pantograph or of the swing arm (19, 112),
**characterized in that**
the contact device can be arranged on a roof (102) of the vehicle below the charging contact unit, wherein the contact device can be positioned in the vertical direction relative to the charging contact unit by means of the pantograph or the swing arm, wherein the contact element support or the charging contact unit is arranged on the transverse guide in a freely displaceable manner transversally to the direction of travel of the vehicle.

2. The rapid charging system according to claim 1,
**characterized in that**
the contact elements (17, 84) are arranged on the contact element support (16) relative to the charging contact elements (18, 90) in such a manner that a defined order is maintained when forming contact pairs when the contact device (14, 83) and the charging contact unit (12, 89, 100) are joined.

3. The rapid charging system according to claim 1 or 2,
**characterized in that**
the contact element support (16) forms two, preferably three positioning surfaces (52, 54), which are designed to match contact surfaces (45, 46) of the charging contact unit (12, 89, 100) for coming into contact with the contact element support.

4. The rapid charging system according to any one of the preceding claims,
**characterized in that**
the contact elements (17, 128) are bolt-shaped, wherein the contact elements are elastically mounted on the contact element support (16).

5. The rapid charging system according to any one of the preceding claims,
**characterized in that**
at least two contact elements (17, 128) protrude at different heights (H₁, H₂, H₃) relative to a surface of the contact element support (16).

6. The rapid charging system according to any one of the preceding claims,
**characterized in that**
the charging contact unit (12, 89, 100) forms a receiving opening (30) for the contact device (14, 83, 114), wherein the contact device can be inserted into the receiving opening of the charging contact unit.

7. The rapid charging system according to claim 6,
**characterized in that**
the receiving opening (30) forms a guide for the contact device when the contact device (14, 83, 114) and the charging contact unit (12, 89, 100) are joined.

8. The rapid charging system according to any one of the preceding claims,
**characterized in that**
the charging contact unit (12, 89, 100) is composed of a charging contact element support (31) and of the charging contact elements (18, 90), wherein the charging contact element support is made of a plastic material.

9. The rapid charging system according to any one of the preceding claims,
**characterized in that**
the charging contact unit (12, 89, 100) is realized as a roof-shaped longitudinal rail which can be arranged in a direction of travel (106) of the vehicle (103).

10. The rapid charging system according to any one of the preceding claims,
**characterized in that**
the charging contact elements (18) are realized as conductor strips (32, 33, 34, 35, 96).

11. A method for forming an electrical conductive connection between a vehicle and a stationary charging station, in particular for a rapid charging system (10, 82, 94, 98) for electrically driven vehicles, such as electric buses or the like, comprising a contact apparatus (11, 99) and a charging contact unit (12, 89), wherein the contact apparatus is arranged on a vehicle (103), wherein the contact apparatus comprises a contact device (14, 83, 114), wherein the contact device is brought into contact with the charging contact device of the charging station, wherein the contact apparatus or the charging contact unit comprises a positioning device (15, 113), wherein the contact device is positioned relative to the charging contact unit by means of the positioning device, wherein the positioning device has a pantograph or a swing arm (19, 112), wherein the contact device has a contact element support (16) comprising contact elements (17, 84, 128), wherein the contact elements are brought into contact with charging contact elements (18, 90) of the charging contact unit so as to form contact pairs, wherein the contact device and the charging contact unit are joined, wherein the positioning device has a transverse guide (25, 111), by means of which the contact element support is positioned transversely relative to the charging contact unit during joining,
**characterized in that**
the contact device is arranged on a roof (102) of the vehicle below the charging contact unit, wherein the contact device is positioned in the vertical direction relative to the charging contact unit by means of the pantograph or the swing arm, wherein the contact element support or the charging contact unit freely displaced on the transverse guide transversally to the direction of travel of the vehicle.

12. The method according to claim 11,
**characterized in that**
first, a first contact pair is formed between a first contact element (17, 84, 128) and a first charging contact element (18, 90) before another contact pair is formed between another contact element (17, 84, 128) and another charging contact element (18, 90).

## Revendications

1. Système de recharge rapide (10, 82, 94, 98) pour des véhicules à entraînement électrique, notamment des bus électriques ou d'autres véhicules semblables, le système de recharge rapide comprenant un dispositif de contact (11, 99) et une unité de contact de recharge (12, 89, 100), le dispositif de contact servant à former une connexion électrique conductrice entre un véhicule et une station de recharge fixe comprenant une unité de contact de recharge (12, 89, 100), le dispositif de contact pouvant être disposé sur un véhicule (103), le dispositif de contact comprenant un moyen de contact (14, 83, 114), le moyen de contact pouvant venir en contact avec l'unité de contact de recharge, le dispositif de contact ou l'unité de contact de recharge comprenant un moyen de positionnement (15, 113), le moyen de contact pouvant être positionné par rapport à l'unité de contact de recharge au moyen du moyen de positionnement, le moyen de positionnement ayant un pantographe ou un bras oscillant (19, 112), le moyen de contact ayant un support d'éléments de contact (16) comprenant des éléments de contact (17, 84, 128), les éléments de contact pouvant venir en contact avec des éléments de contact de recharge (18, 90) de l'unité de contact de recharge afin de former des paires de contact, le moyen de positionnement ayant un guide transversal (25, 111) au moyen duquel le support d'éléments de contact peut être positionné dans la direction transversale par rapport à l'unité de contact de recharge, le guide transversal étant disposé à une extrémité distale du pantographe ou du bras oscillant (19, 112) du côté de contact,
**caractérisé en ce que**
le moyen de contact peut être disposé sur un toit (102) du véhicule au-dessous de l'unité de contact de recharge, le moyen de contact pouvant être positionné dans la direction verticale par rapport à l'unité de contact de recharge au moyen du pantographe ou du bras oscillant, le support d'éléments de contact ou l'unité de contact de recharge étant disposé sur le guide transversal de manière librement déplaçable dans la direction transversale par rapport au sens de la marche du véhicule.

2. Système de recharge rapide selon la revendication 1,
**caractérisé en ce que**
les éléments de contact (17, 84) sont disposés sur le support d'éléments de contact (16) par rapport aux éléments de contact de recharge (18, 90) de telle manière qu'un ordre défini est maintenu lors de la formation de paires de contact quand le moyen de contact (14, 83) et l'unité de contact de recharge (12, 89, 100) sont joints.

3. Système de recharge rapide selon la revendication 1 ou 2,
**caractérisé en ce que**
le support d'éléments de contact (16) forme deux, de préférence trois, surfaces de positionnement (52, 54) qui sont configurées de manière correspondante à des surfaces de contact (45, 46) de l'unité de contact de recharge (12, 89, 100) pour venir en contact avec le support d'éléments de contact.

4. Système de recharge rapide selon l'une quelconque des revendications précédentes,
**caractérisé en ce que**
les éléments de contact (17, 128) sont en forme de goujon, les éléments de contact étant montés élastiquement sur le support d'éléments de contact (16).

5. Système de recharge rapide selon l'une quelconque des revendications précédentes,
**caractérisé en ce**
**qu'**au moins deux éléments de contact (17, 128) font saillie à des hauteurs différentes (H₁, H₂, H₃) par rapport à une surface du support d'éléments de contact (16).

6. Système de recharge rapide selon l'une quelconque des revendications précédentes,
**caractérisé en ce que**
l'unité de contact de recharge (12, 89, 100) forme une ouverture de réception (30) pour le moyen de contact (14, 83, 114), le moyen de contact pouvant être inséré dans l'ouverture de réception de l'unité de contact de recharge.

7. Système de recharge rapide selon la revendication 6,
**caractérisé en ce que**
l'ouverture de réception (30) forme un guide pour le moyen de contact quand le moyen de contact (14, 83, 114) et l'unité de contact de recharge (12, 89, 100) sont joints.

8. Système de recharge rapide selon l'une quelconque des revendications précédentes,
**caractérisé en ce que**
l'unité de contact de recharge (12, 89, 100) est composée d'un support d'éléments de contact de recharge (31) et des éléments de contact de recharge (18, 90), le support d'éléments de contact de recharge étant en matière plastique.

9. Système de recharge rapide selon l'une quelconque des revendications précédentes,
**caractérisé en ce que**
l'unité de contact de recharge (12, 89, 100) est réalisée comme rail longitudinal en forme de toit qui peut être disposé dans un sens de la marche (106) du véhicule (103).

10. Système de recharge rapide selon l'une quelconque des revendications précédentes,
**caractérisé en ce que**
les éléments de contact de recharge (18) sont réalisés comme bandes conductrices (32, 33, 34, 35, 96).

11. Procédé de formation d'une connexion électrique conductrice entre un véhicule et une station de recharge fixe, notamment pour un système de recharge rapide (10, 82, 94, 98) pour des véhicules à entraînement électrique, tels que des bus électriques ou d'autres véhicules semblables, comprenant un dispositif de contact (11, 99) et une unité de contact de recharge (12, 89), le dispositif de contact étant disposé sur un véhicule (103), le dispositif de contact comprenant un moyen de contact (14, 83, 114), le moyen de contact étant mis en contact avec le moyen de contact de recharge de la station de recharge, le dispositif de contact ou l'unité de contact de recharge comprenant un moyen de positionnement (15, 113), le moyen de contact étant positionné par rapport à l'unité de contact de recharge au moyen du moyen de positionnement, le moyen de positionnement ayant un pantographe ou un bras oscillant (19, 112), le moyen de contact ayant un support d'éléments de contact (16) comprenant des éléments de contact (17, 84, 128), les éléments de contact étant mis en contact avec des éléments de contact de recharge (18, 90) de l'unité de contact de recharge afin de former des paires de contact, le moyen de contact et l'unité de contact de recharge étant joints, le moyen de positionnement ayant un guide transversal (25, 111) au moyen duquel le support d'éléments de contact est positionné dans la direction transversale par rapport à l'unité de contact de recharge quand ils sont joints,
**caractérisé en ce que**
le moyen de contact est disposé sur un toit (102) du véhicule au-dessous de l'unité de contact de recharge, le moyen de contact étant positionné dans la direction verticale par rapport à l'unité de contact de recharge au moyen du pantographe ou du bras oscillant, le support d'éléments de contact ou l'unité de contact de recharge étant déplacé librement sur le guide transversal dans la direction transversale par rapport au sens de la marche du véhicule.

12. Procédé selon la revendication 11,
**caractérisé en ce**
**qu'**une première paire de contact est d'abord formée entre un premier élément de contact (17, 84, 128) et un premier élément de contact de recharge (18, 90) avant qu'une autre paire de contact soit formée entre un autre élément de contact (17, 84, 128) et un autre élément de contact de recharge (18, 90).
